# EUROPEAN PATENT SPECIFICATION

(11) **EP 2 591 283 B1**
(45) Date of publication and mention of the grant of the patent: **26.08.2015**
(21) Application number: 11741482.1
(22) Date of filing: 06.07.2011
(51) Int. Cl.: F21S 8/06, H01R 103/00, F21S 2/00, F21V 21/10, F21V 23/06, H01R 24/38, H02G 15/00, F21Y 101/02, F21V 21/12, H01B 13/004, H01R 25/00, F21V 21/002, F21V 21/02

(54) **LOW VOLTAGE RIGID CABLE**
STARRES NIEDERSPANNUNGSKABEL
CÂBLE RIGIDE POUR BASSE TENSION

(30) Priority: 09.07.2010 GB 201011577
(43) Date of publication of application: 15.05.2013
(73) Proprietor: TP24 Limited, Chatteris, Cambridgeshire PE16 6AG (GB)
(72) Inventor: DAVIS, Shaun, Chatteris, Cambridgeshire PE16 6AG (GB)
(74) Representative: Probert, Rhyan Wyn
(86) International application number: PCT/GB2011/051270
(87) International publication number: WO 2012/004598

(56) References cited:
- FR-A- 1 215 214
- US-A- 5 149 282
- US-A- 5 957 717

## Description

### FIELD OF INVENTION

This disclosure relates to a rigid cable with a low voltage rating. The disclosure also relates to a rigid cable structure comprising at least one rigid cable. Moreover, the disclosure relates to a lighting system comprising one or more of the rigid cables.

### BACKGROUND TO THE INVENTION

A rigid cable is understood to be an electric cable having a substantially rigid construction.

Due to its rigid construction, a rigid cable is able to substantially maintain its shape under an applied load. For this reason, rigid cables have been used to both support and transfer electrical current to an electrical device.

UK Patent Application No 89076739.1 describes a lighting system comprising one or more rigid cables. The configuration of the lighting system may be changed by adding or removing rigid cables. The rigid cable comprises an internal live conductor, an external neutral conductor and coupling means to secure the rigid cable end-to-end with other cables of substantially identical form.

Since the neutral conductor is exposed and the rigid cable does not comprises any means to protect a user from an electric shock, this particular rigid cable is only suitable for transferring an extra-low voltage, where the voltage rating is less than 50V AC and the risk of electric shock is low. The rigid cable is not suitable for low voltage applications of between 50-1000V AC and 75-1500V DC where the risk of electric shock is high. Hence, the rigid cable has limited application. For example, the rigid cable is not suitable voltage supply. Other examples of rigid cables or lighting assemblies may be found in US 5,149,282, which is considered the closest prior art; US 5,957,717 and FR1215214.

Embodiments of the present invention seek to overcome or address the problems associated with the prior art as discussed above. Embodiments of the present invention seek to provide an improved rigid cable. More specifically, embodiments of the present invention seek to provide a rigid cable that is suitable for low voltage supply applications.

### SUMMARY OF THE INVENTION

A first aspect of the invention relates to a rigid cable with a low voltage rating.

The low voltage rigid cable comprises a substantially rigid housing, a live conductor arranged within the housing, a neutral conductor arranged within the housing, a first coupling means to couple the rigid cable with a first member, a second coupling means configured to couple the rigid cable with a second member and protection means to protect against electric shock. The housing is configured to form an earth conductor.

The protection means may comprise an insulating means, the insulating means being configured to form an insulating barrier between the conductive parts of the rigid cable.

The protection means may additionally or alternatively comprise double insulation including first insulating means configured to form a primary insulation barrier for the conductive parts of the rigid cable and second insulating means configured to form a secondary insulating barrier between the conductive parts of the rigid cable so as to prevent electric shock in the event of a failure of the first insulating means. In an embodiment of the invention, the housing may be configured to form a secondary insulating barrier.

The protection means may additionally or alternatively comprise reinforced insulation configured to form an insulation barrier between the conductive parts of the rigid cable that is equivalent to double insulation.

In a preferred embodiment of the first aspect of invention, the rigid cable comprises:
a substantially rigid housing that is configured to form an earth conductor:
   a live conductor arranged within the housing:
   a neutral conductor arranged within the housing;
   insulating means to form an insulating barrier between the conductors;
   first coupling means to mechanically and electrically couple the rigid cable with a first member; and
   second coupling means to mechanically and electrically couple the rigid cable with a second member.

This rigid cable is configured to protect a user against electrical shock because:-
no current carrying conductor is exposed and so accessible for human contact when the rigid cable is in use;
the transfer of electrical current is stopped if the rigid cable is no longer in coupling contact with the first member and/or the second member;
the insulating means form an insulating barrier between the conductors; and in the event of a fault, the earth conductor directs any electrical current to earth so as to prevent the housing from becoming unsafe.

The first coupling means and/or second coupling means of the rigid cable may be releasable coupling means. As a result, the rigid cable, first member and/or second member may be coupled, decoupled, reconfigured or replaced as and when required.

Alternatively, the first coupling means and/or second coupling means of the rigid cable may be non-releasable coupling means such that the rigid cable is permanently coupled to the first member and/or second member respectively.

The first coupling means and second coupling means may comprise any suitable engaging means to electrically couple the rigid cable with the first member and second member respectively. For example, the first coupling means may comprise a first live contact coupled to a first end of the live conductor, a first neutral contact coupled to a first end of the neutral contact and a first earth conductor coupled to a first end of the housing. Likewise, the second coupling means may comprise a second live contact coupled to a second end of the live conductor, a second neutral contact coupled to a second end of the neutral conductor and second earth contact coupled to a second end of the housing.

The first coupling means and second coupling means comprise any suitable engaging means to mechanically couple the rigid cable with the first member and second member respectively. For example, the first coupling means and/or second coupling means may comprise a screw thread portion to threadably engage a complementary screw thread portion of the first member/second member respectively.

The first coupling means and/or the second coupling means of the rigid cable may be a male coupling means that is configured to mechanically and electrically interconnect complementary female coupling means of the first member/second member.

The male coupling means may comprise a plug portion that is configured to project from a first end of the housing. The plug portion may comprise a live contact that is coupled to the live conductor of the rigid cable and a neutral contact that is coupled to the neutral conductor of the rigid cable. The live contact may be in the form of a central pin contact. The neutral contact may be arranged coaxially, in a stepped formation relative to the live contact with an insulator located therebetween so as to electrically and spatially separate the neutral contact and live contact. The neutral contact may have an annular shape.

The plug portion may further comprise an earth contact. The earth contact may have an annular shape.

The earth contact may be arranged coaxially, in a stepped formation relative to the neutral contact and the live contact with an insulator located therebetween so as to electrically and spatially separate the earth contact, neutral contact and live contact.

In an alternative embodiment, the earth contact may be arranged separately from the plug portion.

The plug portion may comprise mechanical engaging means. For example, the plug portion may comprise a screw thread portion to threadably engage the rigid cable.

The second coupling means and/or first coupling means of the rigid cable may be a female coupling means that is configured to mechanically and electrically interconnect the complementary male coupling means of another member. The female coupling means may be configured to mechanically and electrically interconnect with the male coupling means of another rigid cable. Hence, two or more rigid cables having a similar form may be coupled together. The female coupling means may be configured to mechanically and electrically engage a light source having a male coupling means.

The female coupling means may comprise a socket portion that may be configured to project from a second end of the housing or located within a second end region of the housing. The socket portion may comprise a recess that is configured to at least substantially receive the plug portion of the complementary male coupling means, a live contact that is coupled to the live conductor of the rigid cable and is configured to form a mating contact with the live contact of the complementary male coupling means and a neutral contact that is coupled to the neutral conductor of the rigid cable and is configured to form a mating contact with the neutral contact of the complementary male coupling means.

Depending on the configuration of the complementary male coupling means and the earth conductor, the female coupling means may comprise an earth contact arranged within the socket or arranged separately from the socket.

The rigid cable may be configured to be coupled to any suitable member such as another cable (rigid or flexible), a mounting means, power supply means, an electrical device etc. For example, the rigid cable may be configured to be coupled end-to-end with other rigid cables of a similar form, thereby constructing a rigid cable structure. The rigid cable may be configured to be coupled to an electrical device such as a light source, thereby providing a supporting arm to support the light source and transfer electrical current to the light source.

A second aspect of the invention relates to a rigid cable structure for supporting an electrical device and for transferring electrical current from a power supply to the electrical device, the cable structure comprising at least one rigid cable according to the first aspect of the invention.

A third aspect of the invention relates to a lamp assembly comprising at least one light source coupled to a rigid cable according to the first aspect of the invention.

The light source may be a low energy light source such as a compact fluorescent lamp (CFL) or light emitting diode (LED).

The rigid cable may comprise power control means to regulate the voltage supply to the light source. For example, the rigid cable may comprise a ballast for use with the low energy light source.

A fourth aspect of the invention relates to a lighting system comprising:
means for mounting the lighting system on a supporting surface;
means for connecting the lighting system to a power supply; and
at least one rigid cable according to the first aspect of the invention, whereby the at least one rigid cable is configurable to support at least one light source and transfer electrical current to the at least one light source.

The mounting means may be configured to mount the lighting system on a floor, table, wall or ceiling.

The lighting system may further comprise one or more light source and/or one or more lamp assembly according to the third aspect of the invention.

The lighting system may be a modular lighting system that can be assembled by a user.

We also describe a kit of parts for a modular lighting system comprising:
means for mounting the lighting system on a supporting surface;
means for connecting the lighting system to a power supply;
at least one rigid cable according to the first aspect of the invention, whereby the at least one rigid cable is configurable to support at least one light source and transfer an electrical current to the at least one light source.

The kit of parts may further comprise at least one light source and/or at least one lamp assembly according to the third aspect of the invention.

### BRIEF DESCRIPTION OF DRAWINGS

For a better understanding of the present invention and to show how it may be carried into effect, reference will now be made by way of example only to the accompanying drawings, in which:
Figure 1 a depicts a first embodiment of a rigid cable according to a first aspect of the invention;
Figures 1b depicts an enlarged side view of the plug portion of the rigid cable of Figure 1 a;
Figure 1c depicts an enlarged cross-sectional view of the plug portion of the rigid cable of Figure 1 a;
Figure 1d depicts the rigid cable of Figure 1 a prior to being coupled with a mounting unit;
Figure 2a depicts a second embodiment of a rigid cable according to a first aspect of the invention;
Figure 2b depicts a cross-sectional view of the rigid cable of Figure 2a;
Figure 2c depicts an enlarged cross-sectional view of the male coupling means of the rigid cable of Figure 2a;
Figure 2d depicts an enlarged cross-sectional view of the female coupling means of the rigid cable of Figure 2a;
Figures 2e and 2f sequentially depict the coupling of the rigid cable of Figure 2a with another rigid cable of the same form;
Figure 3a depicts a male coupling means of a third embodiment of a rigid cable according to the first aspect of the invention;
Figures 3b, 3c and 3d sequentially depict the coupling of the male coupling means of the rigid cable of Figure 3a with a complementary female coupling means of a mounting unit;
Figure 4 depicts an embodiment of a lamp assembly according to a third aspect of the invention;
Figures 5a and 5b depict a first embodiment of a lighting system according to a fourth aspect of the invention;
Figures 6a and 6b depict a second embodiment of a lighting system according to a fourth aspect of the invention.

### DETAILED DESCRIPTION

### A. Rigid Cable

The first aspect of the invention relates to a rigid cable with a low voltage rating.

According to International Standards, a low voltage device falls in the range of approximately 50-1000V AC or 75-1500V DC. Thus, the low voltage rigid cable according to the first aspect of the invention is deemed to having a voltage rating in the range of approximately 50-1000V AC or 75-1500V DC.

A second aspect of the invention relates to a rigid cable structure comprising at least one rigid cable according to the first aspect of the invention that is configured to support a low voltage electrical device and transfer an electrical current to the electrical device.

A third aspect of the invention relates to a light assembly comprising at least one light source coupled to a rigid cable according to the first aspect of the invention.

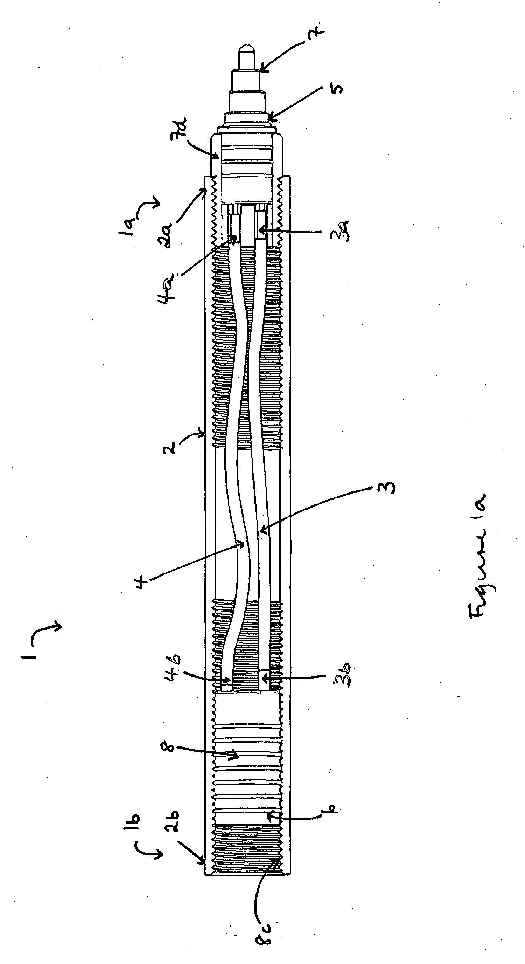

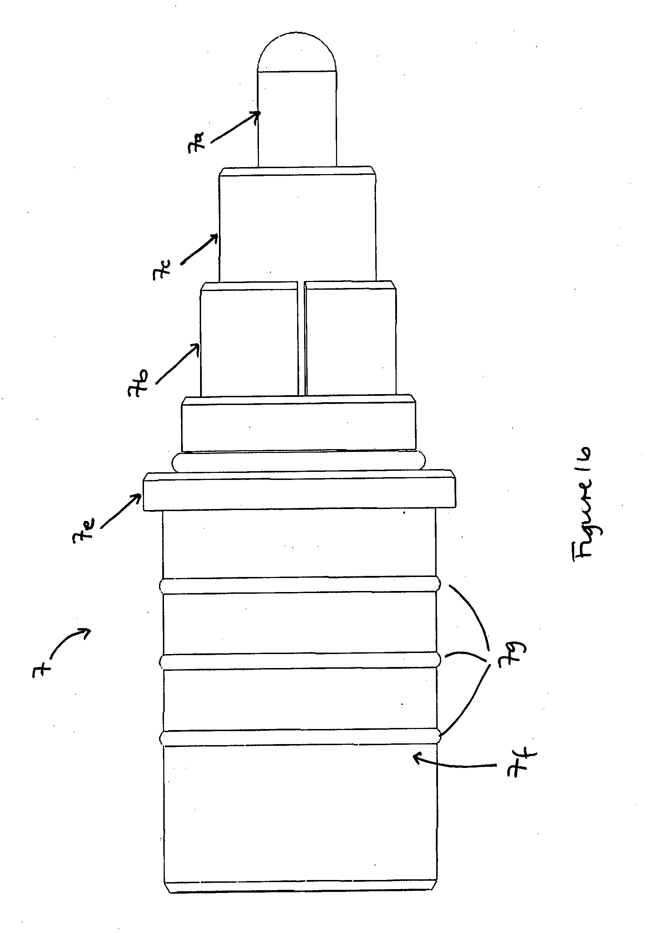

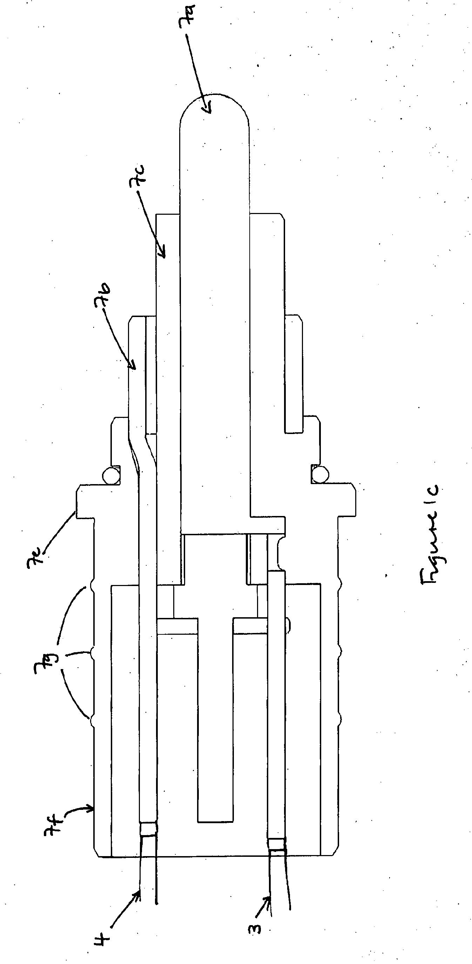

Figures 1a-4 relate to different embodiments of the rigid cable according to the first aspect of the invention.

With reference to Figures 1a-4, a rigid cable (1) according to the first aspect of the invention comprises a substantially rigid housing (2), a live conductor (3) arranged within the housing, a neutral conductor (4) arranged within the housing, insulating means (not shown) to form an insulating barrier between the conductors, first coupling means to mechanically and electrically couple the rigid cable with a first member, second coupling means to mechanically and electrically couple the rigid cable with a second member and protection means to protect against electric shock.

The protection means may comprise an earth conductor configured to connect the rigid cable to an external earthing system and insulating means configured to form an insulating barrier between the conductors of the rigid cable. In Figures 1a-4, the housing (2) of the rigid cable is configured to form the earth conductor, the live conductor (3) is encased in a first insulating sleeve and the neutral conductor (4) is encased in a second insulation sleeve.

The rigid cable may additionally or alternatively comprise protection means having double insulation including first insulating means configured to form a primary insulation barrier between conductive parts of the rigid cable and second insulating means configured to form a secondary insulating barrier between the conductive parts of the rigid cable so as to prevent electric shock in the event of a failure of the first insulating means. The housing may be configured to form a secondary insulating barrier.

The rigid cable may additionally or alternatively comprise protection means having reinforced insulation configured to form an insulation barrier between conductive parts of the rigid cable that is equivalent to double insulation.

The rigid cable has a rod-like configuration with a first end and a second end. The rigid cable may be any suitable shape or length. The rigid cable may be substantially linear, curved, L-shaped and S-shaped. In Figures 1a-4, the rigid cable is a substantially linear rigid cable having a first end (1 a) and a second end (1 b).

The housing (2) is formed from a substantially rigid material. The housing is configured so that the rigid cable is able to substantially maintain its shape under an applied load. The housing is configured such that the rigid cable has sufficient mechanical integrity to support an electrical device of a predetermined weight and size. For example, the housing may be suitably rigid for the rigid cable to have sufficient mechanical integrity to support at least one light source.

The housing may be configured to form the outer casing of the rigid cable. As a result, the housing is thereby exposed and accessible to human contact. In Figures 1a-4, the outer casing of the rigid cable is a housing (2) having a tubular structure with a first end (2a) and a second end (2b).

As discussed above, the housing is configured to form the earth conductor. As an earth conductor, the housing provides a protective low impedance path which is configured to ultimately lead an electrical current to earth or ground so as to prevent the housing from becoming unsafe should a fault occur.

A housing configured to form the earth conductor comprises an electrically conductive material. For example, the housing may comprise an electrically conductive metal material such as steel, brass, aluminium or copper.

Alternatively, the housing may be configured to form an insulator. The housing may be formed from an insulating material so as to electrically insulate the rigid cable. For example, the housing may comprise a plastics material, ceramic material or glass.

The live conductor of the rigid cable is a primary conductor configured to carry a low voltage electrical current. As shown in Figures 1a-4, the live conductor (3) comprises a first end (3a) and a second end (3b). The live conductor is arranged within the housing and is configured to extend between the first end and the second end of the housing. The live conductor is located within the housing so that it is not accessible to the user. The live conductor may be a rigid or flexible conductor. As discussed above, the live conductor may be insulated (enclosed by an insulating body or sleeve) so as to form a protective insulating barrier between the live conductor and the other conductive parts of the rigid cable.

The neutral conductor of the rigid cable is a primary conductor configured to carry a low voltage electrical current. As shown in Figures 1a-4. the neutral conductor (4) comprises a first end (4a) and a second end (4b). The neutral conductor is arranged within the housing (2) and is configured to extend between the first end and the second end of the housing. The neutral conductor is located within the housing so that it is not accessible to a user. The neutral conductor may be a rigid or flexible conductor. The neutral conductor may be insulated (enclosed by an insulating body) so as to form a protective insulating barrier between the neutral conductor and the other conductive parts of the rigid cable.

The first coupling means is provided to mechanically and electrically couple the rigid cable to the first member. The second coupling means is provided to mechanically and electrically couple the rigid cable to the second member.

The first coupling means and/or second coupling means may be releasable coupling means whereby the rigid cable may be releasably coupled to the first member and/or second member. Due to the releasable coupling means, the rigid cable, first member and/or second member may be coupled, decoupled, replaced or reconfigured as required by the user. Alternatively, the first coupling means and/or second coupling means may be non-releasable coupling means whereby the rigid cable may be permanently coupled to the first member and/or second member.

The rigid cable may be coupled via the coupling means to any suitable member. For example, the rigid cable may be coupled via the coupling means to another rigid cable, a flexible cable, an electrical power supply, a mounting unit, a base unit, a ceiling rose, an electrical device etc. For example, the rigid cable may be utilised in a lighting system powered by the mains AC voltage supply and configured to support a light source and transfer electrical current from the power supply to the light source. The rigid cable may be coupled end-to-end to other rigid cables of a similar form so as to form a rigid cable structure. If the rigid cables comprise releasable coupling means, it will be understood that the configuration of the rigid cable structure can be adjusted by adding or removing rigid cables.

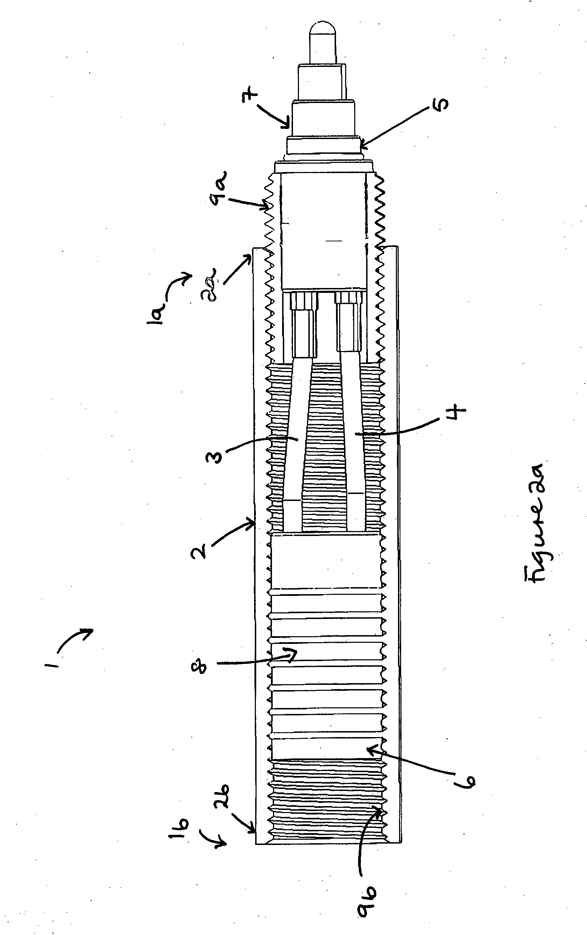

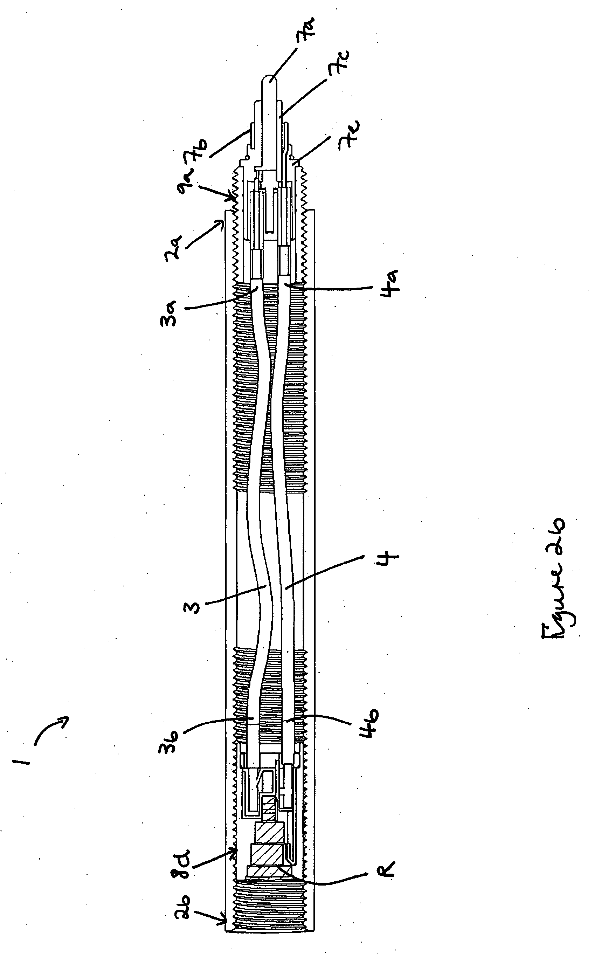

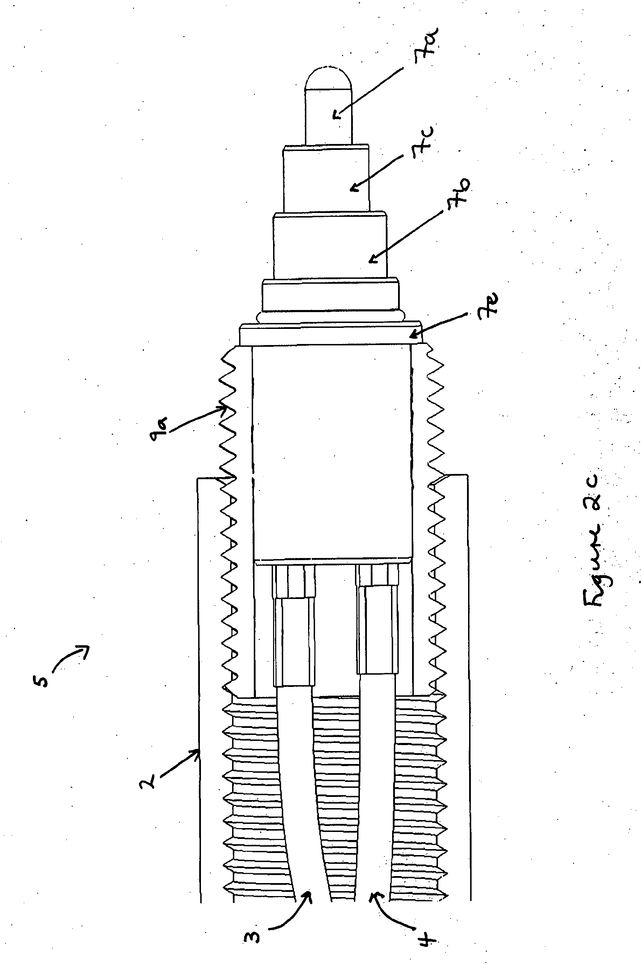

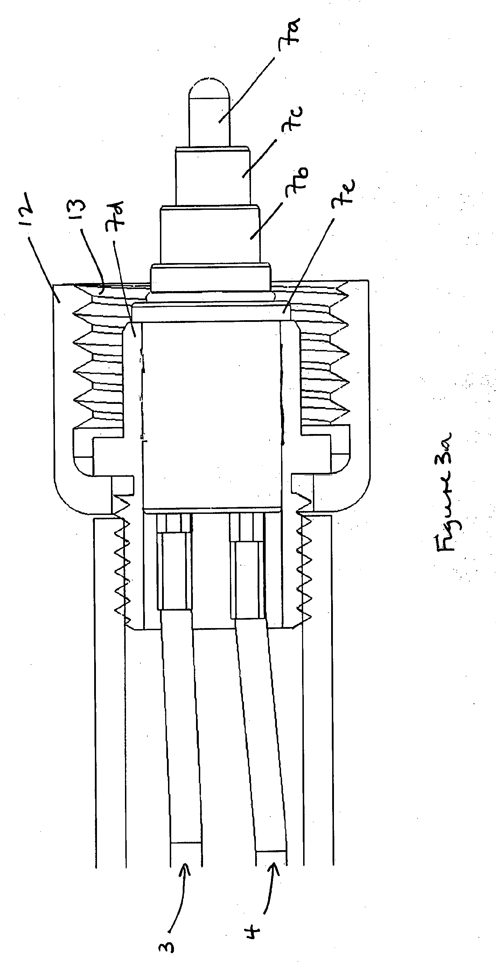

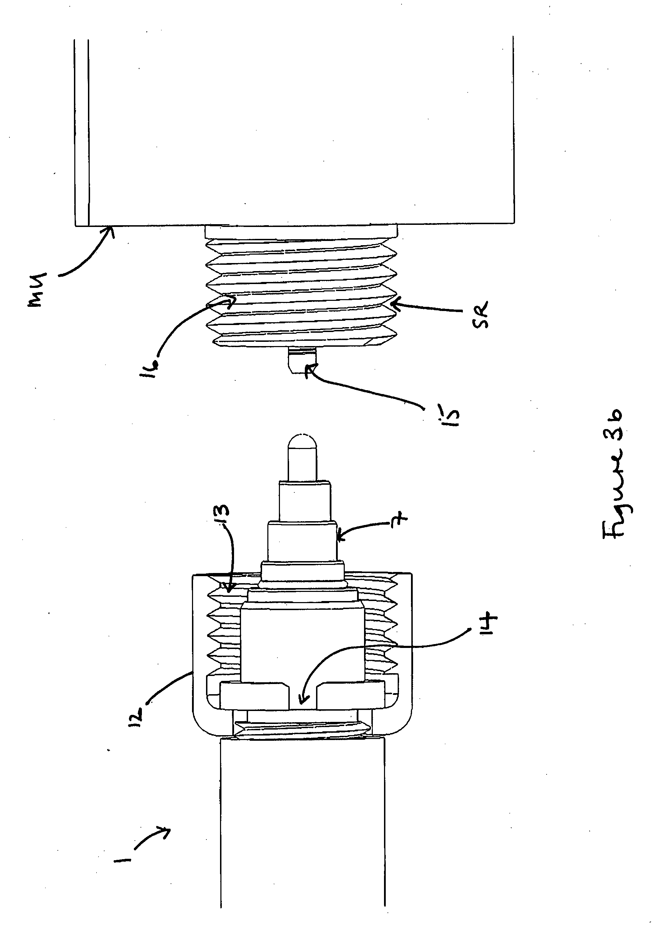

The first coupling means and second coupling means comprise any suitable engaging means to mechanically couple the rigid cable to other members. For example, the coupling means may comprise mechanical coupling means including push fit coupling means, latching means, clipping means, screw means, resilient biasing means, friction fit means, key locking means or screw thread means. In the embodiment depicted in Figures 1a-1d, the first coupling means comprises abutting means so as to resiliently engage the rigid cable with another member. In the embodiment depicted in Figures 2a-2f, the first coupling means comprises a screw thread to threadably engage the rigid cable with other members. In the embodiment depicted in Figures 3a-3d, the first coupling means comprises a screw thread and a recess to couple the rigid cable to another member.

The first coupling means and second coupling means comprise any suitable means to electrically couple the rigid cable to another member. In the embodiments depicted in Figures 1a-4, the first coupling means and second coupling means comprise electrical contacts to electrically couple the rigid cable to other members. For example, the first coupling means may comprise a first live contact coupled to a first end of the live conductor, a first neutral contact coupled to a first end of the neutral contact and a first earth contact coupled to a first end of an earth conductor (e.g. first end of the housing), whereby the first live contact, first neutral contact and a first earth contact are coaxially arranged. Likewise, the second coupling means may comprise a second live contact coupled to a second end of the live conductor, a second neutral contact coupled to a second end of the neutral conductor and second earth contact coupled to a second end of the earth conductor (e.g. second end of the housing).

The first coupling means and/or second coupling means may be a male coupling means (5) that is configured to couple the rigid cable with another member having complementary female coupling means.

The first coupling means and/or second coupling means may be a female coupling means (6) configured to be coupled to the complementary male coupling means of another member.

In the embodiments depicted in Figures 1a-4, the rigid cable comprises a male coupling means (5) located at the first end (1 a) of the rigid cable and a female coupling means (6) located at the second end (1 b) of the rigid cable.

### A1. Male Coupling Means

The male coupling means (5) comprises electrical contacts configured to form an electrical mating contact with corresponding electrical contacts of the complementary female coupling means.

The male coupling means (5) may comprise a plug portion (7) as depicted in Figures 1a-4. The plug portion may be configured to project from one end of the housing. The plug portion may comprise a live contact (7a) and a neutral contact (7b), whereby the live contact is coupled to the live conductor (3) and the neutral contact is coupled to the neutral conductor (4).

As shown in Figure 1a-4, the live contact (7a) may be configured in the form of a central pin contact. The neutral conductor may be configured in the form of an annular sleeve contact (7b). So as to electrically and spatially separate the contacts, the live contact and neutral contact may be arranged coaxially, in a stepped formation, with an insulating means (7c) located therebetween.

The plug portion (7) may further comprise an earth contact (7d, 9a) as depicted in Figures 1a-4. If the housing is configured to form an earth conductor then the earth contact is coupled to the housing. The earth contact may be configured in the form of an annular sleeve contact. The earth contact may be arranged coaxially, in a stepped formation relative to the neutral conductor and live conductor with an insulating means (7e) located therebetween so as to electrically and spatially separate the contacts.

In an alternative design, the male coupling means (5) may comprise an earth contact that is arranged separately to the plug portion. If the housing is configured to form an earth conductor, then the earth contact is coupled to the housing. As an example, the earth contact may be defined by an end surface portion of the housing.

The male coupling means (5) may comprise any suitable engaging means to mechanically couple the male coupling means with a complementary female coupling means. As shown in Figures1a-1d, the plug portion may comprise an engaging region (7f) comprising abutting means (7g) so as to resiliently engage the male coupling means within the female coupling means. In this embodiment, the insulating means (7e) is configured to comprise the engaging region (7f). In Figures 2a-2f, the plug portion may comprise an external screw thread region (9a) to threadably engage the corresponding screw thread region of another member. In this embodiment, the earth contact is configured is to comprise the screw thread region (9a) As shown in Figures 3a-3d, the male coupling means may comprise a collar (12) having a screw thread region (13) to threadably engage the corresponding screw thread region of another member and a locking recess (14) to engage a corresponding key-like protrusion (15) of the member.

### A2. Female Coupling Means

The female coupling means (6) may be configured to mechanically and electrically interconnect with the male coupling means of another rigid cable. Hence, two or more rigid cables having a similar form may be coupled together. The female coupling means may be configured to mechanically and electrically engage a light source having a male coupling means.

The female coupling means (6) comprises electrical contacts configured to form an electrical mating contact with corresponding electrical contacts of the complementary male coupling means. The female coupling means also comprises any suitable engaging means configured to mechanically couple the female coupling means with the male coupling means.

The female coupling means may comprise a socket portion (8) as depicted in Figures 1a-4. The socket portion may be configured to project from the end of the housing or be located within an end region of the housing. The socket portion may define a recess (R) that is configured to receive the plug portion (7) of the male coupling means. A live contact (8a) and neutral contact (8b) may be arranged within the socket portion. The live contact (8a) is coupled to the live conductor (3) and is configured to form a mating contact with the corresponding live contact of the complementary male coupling means. The neutral contact (8b) is coupled to the neutral conductor (4) and is configured to form a mating contact with the corresponding neutral contact of the complementary male coupling means. The live contact and neutral contact are spatially and electrically separated.

The socket portion may further comprise an earth contact. In an alternative arrangement, the earth contact may be arranged separately from the socket portion. If the housing is configured to form an earth conductor then the earth contact is coupled to the housing. The earth contact (8c, 9b) may be an internal surface region of the housing as depicted in Figures 1a-4. The earth contact of the female coupling means is configured to form a mating contact with the corresponding earth contact of the complementary male coupling means. In Figures 2a-2f, the earth contact (9b) is configured to have a screw thread formation.

As mentioned above, the female coupling means comprises any suitable engaging means to mechanically retain the male coupling means. The socket portion may comprise engaging means for retaining the plug portion within the socket portion. For example, the socket portion may comprise resilient biasing means to resiliently engage the plug portion when it is located within the socket portion. In Figures 2a-2f, the female coupling means comprises an earth contact having a screw thread region (9b) so as to threadably engage the corresponding screw thread region of the plug.

### A3. First Embodiment of the Rigid Cable

Figures 1a-1d relate to a first embodiment of the rigid cable (1) comprising a releasable male coupling means (5) arranged at the first end of the cable (1 a) and releasable female coupling means (6) arranged at the second end of the cable (1 b).

As shown in Figures 1a-1d, the male coupling means of the rigid cable comprises a push fit plug portion (7) projecting from the first end of the housing (2a) of the rigid cable. The plug portion comprises a live central pin contact (7a) (the live contact) coupled to the first end of the live conductor (3a) and an annular sleeve neutral contact (7b) (the neutral contact) coupled to the first end of the neutral conductor (4a). The central pin contact and annular sleeve neutral contact are coaxially arranged in a stepped formation and separated by an insulating layer (7c). The plug portion also comprises an earth contact (7d) coupled to a first end of the housing (2a). The earth contact is coaxially arranged in a stepped formation with respect to the central pin contact and annular sleeve neutral contact and separated by an insulating layer (7e).

In this particular embodiment, the insulating layer (7e) is configured to comprise an engaging region (7f) with abutting means (7g).

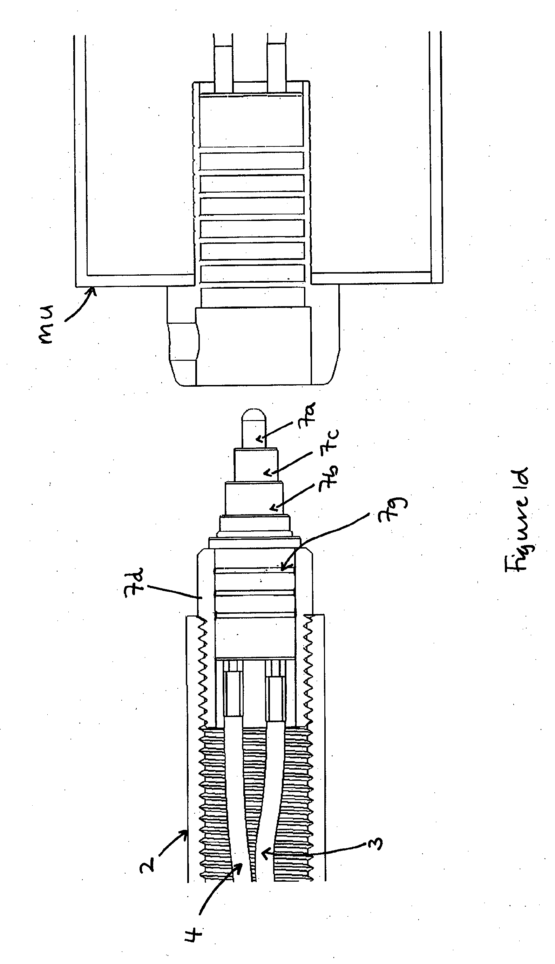

As shown in Figure 1d, the male coupling means of the rigid cable is configured to mechanically and electrically engage with the complementary female coupling means of another member. In this particular embodiment, the member is a mounting unit (MU). The complementary female coupling means comprises a corresponding live contact that is configured to form a mating contact with the live contact (7a) of the male coupling means, a corresponding neutral contact that is configured to form a mating contact with the neutral contact (7b) of the male coupling means. The housing of the mounting unit is configured to form an earth conductor and the female coupling means of the mounting unit comprises an earth contact that is configured to form a mating contact with the earth contact (7d) of the male coupling means. The female coupling means also comprises resilient engaging means to resiliently engage the abutting means (7g) of the engaging region of the plug portion of the male coupling means.

Thus, when the plug portion of the male coupling means is push fitted into the complementary female coupling means of the mounting unit, the contacts of the male coupling means form a mating contact with the corresponding contacts of the female coupling means so as to electrically couple the rigid cable with the mounting unit. Also, the resilient engaging means of the female coupling means resiliently engages the engaging region of the male coupling means so as to mechanically couple the rigid cable with the mounting unit.

The rigid cable is configured such that the housing of the rigid cable is flush with the housing of the mounting unit when they are coupled together, thereby providing a continuous and aesthetically pleasing profile.

### A4. Second Embodiment of the Rigid Cable

Figures 2a-2f depict a second embodiment of the rigid cable (1) comprising a releasable male coupling means (5) arranged at a first end of the rigid cable (1 a) and a releasable female coupling means (6) arranged at a second end of the rigid cable (1 b).

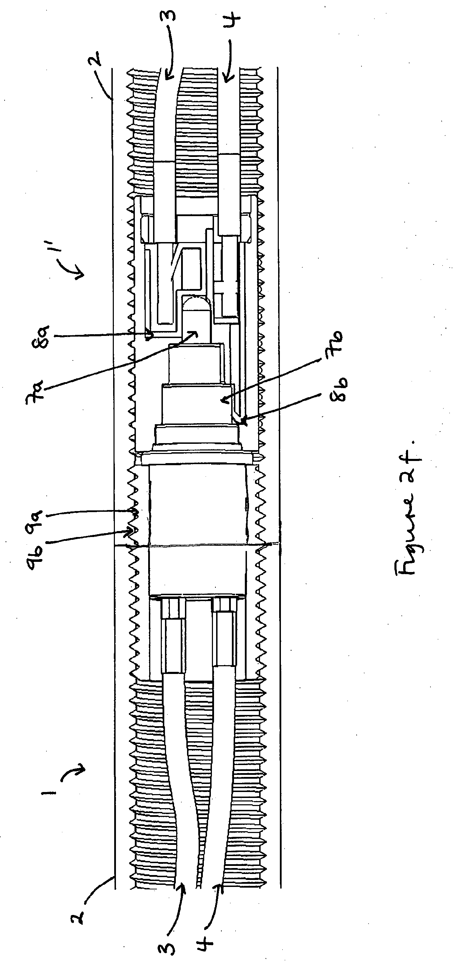

In this particular embodiment, the male and female coupling means comprise screw threads to enhance the mechanical connection of the rigid cable with the first member and second member. Moreover, the male and female coupling means are complementary coupling means. Hence, multiple rigid cables of the same form (1, 1') may be coupled together end-to-end so as to construct a rigid cable structure as shown in Figures 2f.

In this embodiment, the housing (2) is configured to form an earth conductor. The housing (2) is further configured to comprise an internal screw thread at the first end region (2a) of the housing and an internal screw thread at the second end region (2b) of the housing. These screw threads are formed on an inner surface of the housing.

As shown in Figures 2a-2d, the male coupling means comprises a plug portion (7) having a central pin contact (7a) (the live contact) coupled to the first end of the live conductor (3a) and an annular sleeve contact (7b) (the neutral contact) coupled to the first end of the neutral conductor (4a). The central pin contact and annular sleeve contact are coaxially arranged in a stepped formation and separated by an insulating layer (7c). The plug portion also comprises an earth contact (9a) having an external screw thread formation. The earth contact (9a) is coaxially arranged in a stepped formation with respect to the live contact (7a) and neutral contact (7b) and separated by insulating means (7e). The earth contact is provided in the form of an external screw thread so that the plug portion may be screwed into the first end of the housing (threadably engaging the internal screw thread region at the first end of the housing) thereby mechanically and electrically coupling the plug portion and housing. Moreover, the plug portion can be screwed together with a complementary female coupling means of another rigid cable so as to mechanically and electrically couple the rigid cables.

As shown in Figure 2a-2d, the female coupling means comprises a socket portion (8) located in within the housing, towards the second end (2b). The socket portion comprises an external screw thread (8d) so that it may be screwed into and retained within the housing. The socket portion defines a recess (R) that is configured to receive the plug portion of the male coupling means. A live contact (8a) is arranged within the socket portion and is configured so as to form a mating contact with the corresponding live contact (7a) of the male coupling means. A neutral contact (8b) is arranged within the socket portion and is configured so as to form a mating contact with the corresponding neutral contact (7b) of the male coupling means. The live contact is coupled to the second end of the live conductor (3b). The neutral contact is coupled to the second end of the neutral contact (4b). The live contact and neutral contact are spatially and electrically separated.

The female coupling means further comprises an earth contact (9b). The earth contact (9b) is defined by an internal surface portion of the second end of the housing (2b). The earth contact (9b) is in the form of an internal screw thread so that it can threadably engage the corresponding screw threaded earth contact (9a) of a second member/complementary male coupling means of another rigid cable.

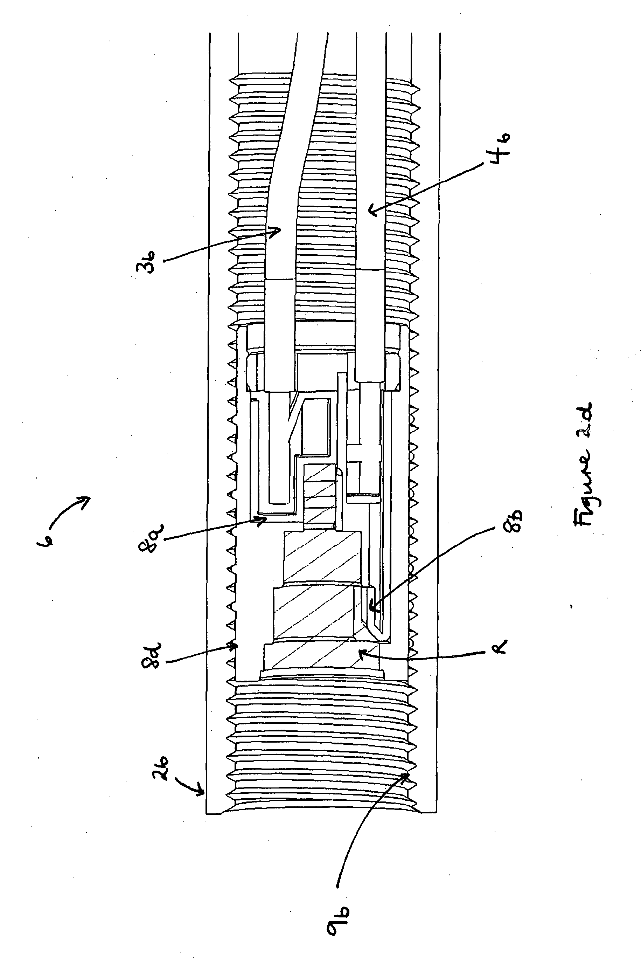

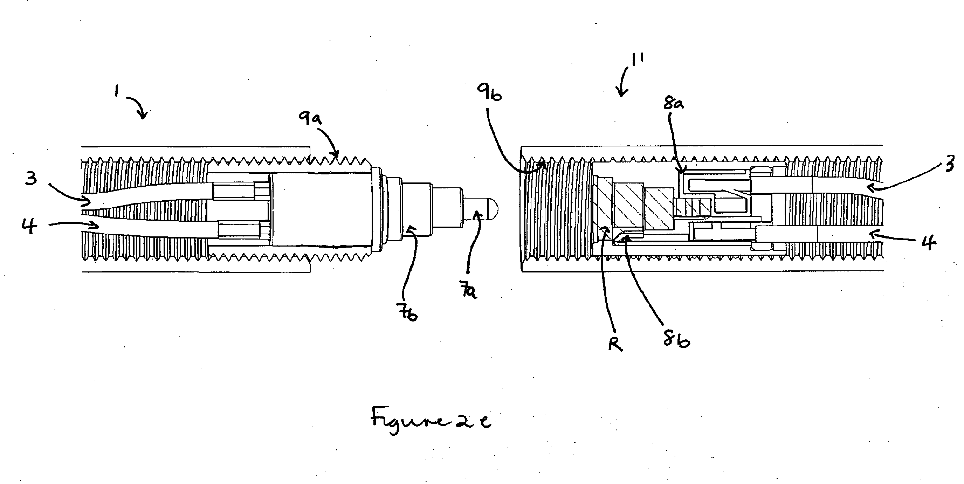

Figures 2e and 2f depict the rigid cable (1) of Figures 2a-2d being coupled with another rigid cable of similar form (1'). Figures 2d and 2e show how the male coupling means (5) of the first rigid cable (1) mechanically and electrically couple with the female coupling means (6) of the second rigid cable (1'). The rigid cables become mechanically engaged when the external screw thread (9a) of the male coupling means threadably engages with the internal screw thread (9b) of the female coupling means. Moreover, since the screw threads are also configured to be earth contacts, the rigid cables (1, 1') become electrically engaged so as to form a continuous earth conductor when the screw threads threadably engage. When the plug portion (7) of the male coupling means is fully located in the recess (R) of the female coupling means the live contact (7a) and neutral contact (7b) of the first rigid cable form an electrical mating contact with the corresponding live contact (8a) and neutral contact (8b) of the second rigid cable so as to form a continuous live conductor and a continuous neutral conductor.

When coupled together, the two rigid cables form a simple and elegant rigid cable structure having a fluid profile.

### A5. Third Embodiment of the Rigid Cable

Figures 3a-3d depict a third embodiment of the rigid cable whereby the releasable male coupling means comprises a plug portion (7) and a collar (12) comprising an internal screw thread portion (13).

The male coupling means of the rigid cable is configured to be coupled to the complementary female coupling means of another member. In the embodiment depicted in Figures 3a-3d, the rigid cable is configured to be coupled to a mounting unit (MU) comprising a complementary female coupling means.

The plug portion of the male coupling means comprises a central pin contact (7a) (the live contact) coupled to the first end of the live conductor (3a), an annular contact (7b) (the neutral contact) coupled to the first end of the neutral conductor (4a) and an earth contact (7d) coupled to the housing (earth conductor). The central pin live contact, annular neutral contact and annular earth contact are coaxially arranged, in a stepped formation. The central pin live contact (7a) and annular neutral contact (7b) are separated by a first insulating layer (7c). The annular earth contact (7d) is separated from the central pin live contact (7a) and annular neutral contact (7b) by a second insulating layer (7e).

The central pin live contact (7a) is configured to form an electrical mating contact with the corresponding live contact of the complementary female coupling means. The annular neutral contact (7b) is configured to form an electrical mating contact with the corresponding neutral contact of the female coupling means. The earth contact (7d) is configured to form an electrical mating contact with the corresponding earth contact of the female coupling means.

The second annular contact comprises at least one recess (14) configured to engage (lock) at least one corresponding protruding portion (15) of the complementary female coupling means of the other member. The recess is provided to as to help correctly orientate the plug portion within the complementary coupling means. Thus, the provision of the recess has the effect of enhancing the mechanical and electrical coupling of the rigid cable with the other member.

The collar (12) of the male coupling means is provided to form a mechanical connection between the rigid cable and the other member. The collar comprises an internal screw thread region (13) that is configured to threadably engage a complementary screw thread formed externally on a spigot region (SR) of the female coupling means of the other member. The collar may be mounted to freely rotate relative to the housing and male plug portion of the rigid cable.

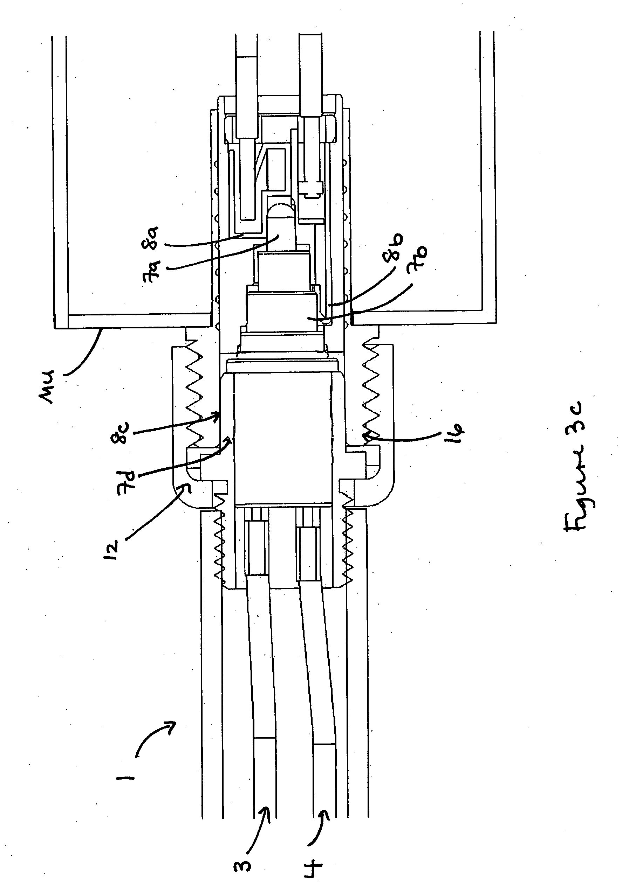

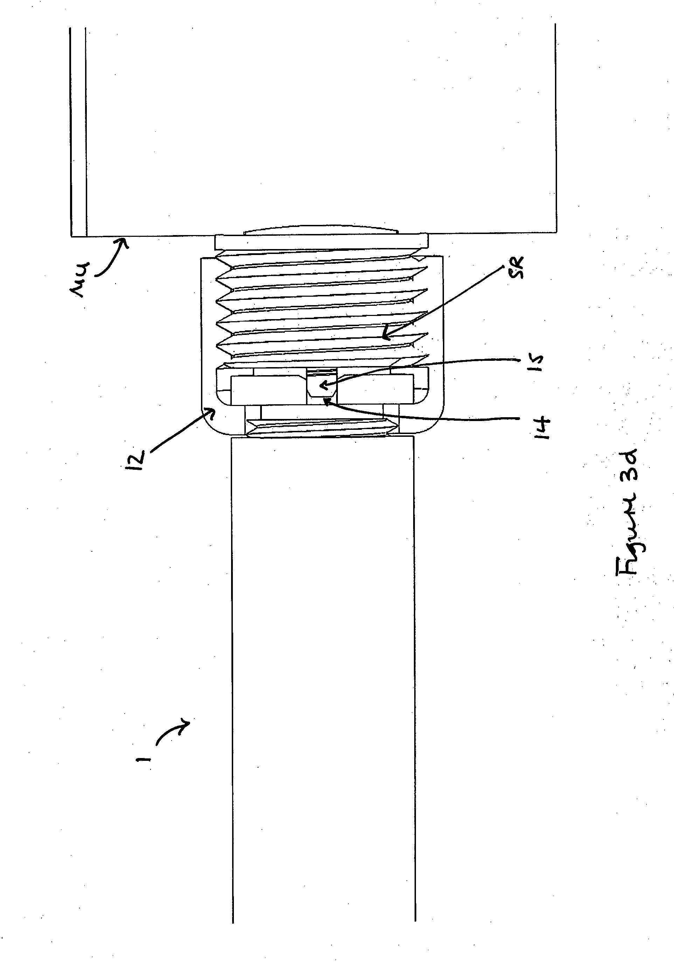

Figures 3c and 3d depict the male coupling means (5) of the rigid cable (1) coupled with a complementary female coupling means of another member. In this case, the member is a mounting unit (MU). The female coupling means of the mounting unit (MU) comprises a socket portion (8) having a recess portion configured to receive the plug portion of the male coupling means, a live contact (8a) configured to form a mating contact with the corresponding live contact (7a) of the male coupling means and a neutral contact (8b) configured to form a mating contact with the corresponding neutral contact (7b) of the male coupling means mounting unit. The mounting unit (MU) further comprises a spigot region (SR) having an external thread region (16) that is configured to threadably engage with the corresponding thread region (13) of the male coupling means. An internal surface of the spigot region (SR) is configured to form an earth contact (8c) so as to form a mating contact with the corresponding earth contact (7d) of the male coupling means

The male coupling means is coupled with the complementary female coupling means by mounting the collar (12) on the spigot region (SR) such that the plug portion (7) is located in the socket (8) and rotating the collar into mating contact with the spigot region. When the plug portion of the male coupling means is push fitted into the socket of the female coupling means of the mounting unit, the contacts (7a, 7b, 7d) of the male coupling means form a mating contact with the corresponding contacts of the female coupling means so as to electrically couple the rigid cable with the mounting unit. Also, when the collar (12) is mounted on and rotated with respect to the spigot region, the male coupling means and female coupling means form threading engagement so as to mechanically couple the rigid cable with the mounting unit.

The rigid cable is configured such that the housing of the rigid cable is flush with the housing of the mounting unit when they are coupled together, thereby providing a continuous and aesthetically pleasing profile.

### A6. Fourth Embodiment of the Rigid Cable

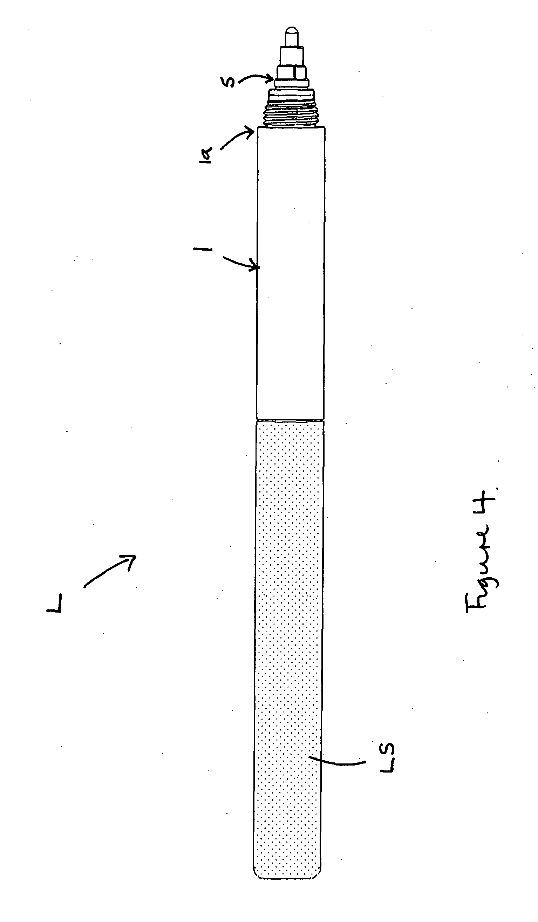

Figure 4 depicts a fourth embodiment of the rigid cable, whereby a rigid cable (1) according to a first aspect of the invention is configured to be coupled to a light source (LS) so as to form a lighting assembly (L).

The rigid cable comprises a male coupling means (5) arranged at a first end of the rigid cable (1 a) and a female coupling means (not shown) arranged at a second end of the rigid cable. The male coupling means is a releasable male coupling means as depicted in Figures 2a-2f. The female coupling means is configured to couple the rigid cable and a light source. The female coupling means may be configured to releasably or permanently couple the rigid cable and the light source.

The rigid cable may be configured to be coupled to any suitable light source. For example, the female coupling means may be configured to engage a low energy light source such as a CFL or LED.

The rigid cable may be configured to be coupled with a low energy light source comprising an integrated ballast.

Alternatively, the rigid cable may comprise any suitable power control means to regulate the power supply to the light source. For example, the rigid cable may be configured to comprise a ballast for use with the low energy light source. The rigid cable may comprise a transformer to step down the voltage supply to the light source as required. The rigid cable may comprise a control gear means or an LED driver.

The rigid cable may be configured to be coupled to one or more light source.

The rigid cable provides a simple and elegant support to the light source and may be configured such that the light source sits flush with the end of the housing, thereby providing an improved light assembly which is aesthetically pleasing.

### B. Lighting System

A fourth aspect of the invention relates to a lighting system comprising at least one rigid cable according to the first aspect of the invention, whereby the at least one cable is configurable to form a rigid cable structure to support at least lamp and transfer an electrical current from a power supply to the at least one lamp.

The lighting system may be a modular lighting system comprising multiple parts that can be assembled by a user to form a lighting system. Preferably, the multiple component parts of the lighting system may be assembled by a user that does not have electrical expertise.

One of more of the multiple component parts of the modular lighting system may be re-arrangeable, replaceable or interchangeable so that the configuration of the lighting system can be changed as and when required by a user. Preferably, the component parts may be re-arrangeable, replaceable or interchangeable when the lighting system is in situ, (i.e. when mounted on a supporting surface) and without having to disconnect from the power supply.

The lighting system may be suitable for mounting on any suitable supporting surface including a floor, table, wall or ceiling.

The lighting system may comprise a mounting means for mounting (mechanically coupling) the lighting system on a supporting system. The mounting means may comprise a base means, a mounting socket or a ceiling rose.

The lighting system may comprise connection means for electrically connecting the lighting system to a power supply. The lighting system may comprise connection means for electrically connecting the lighting system to a low voltage power supply such as the mains power supply.

The lighting system may comprise one or more lamp. The lamp may comprise a low energy light source such as, for example, a CFL or LED. The lighting system may comprise one or more lamp assembly according to the third aspect of the invention. As described above, a lamp assembly comprises a rigid cable according to the first aspect of the invention that can be coupled with the rigid cable structure of the lighting system.

A fourth aspect of the invention relates to a kit of parts for a modular lighting system. The kit of parts comprises:
mounting means for mounting the lighting system on a supporting surface;
connection means for connecting the lighting system to a power supply; and
at least one rigid cable according to the first aspect of the invention, whereby the least one rigid cable is configurable to form a rigid cable structure to support and transfer electrical current from the power to at least one lamp.

### B1. First Embodiment of a Lighting System

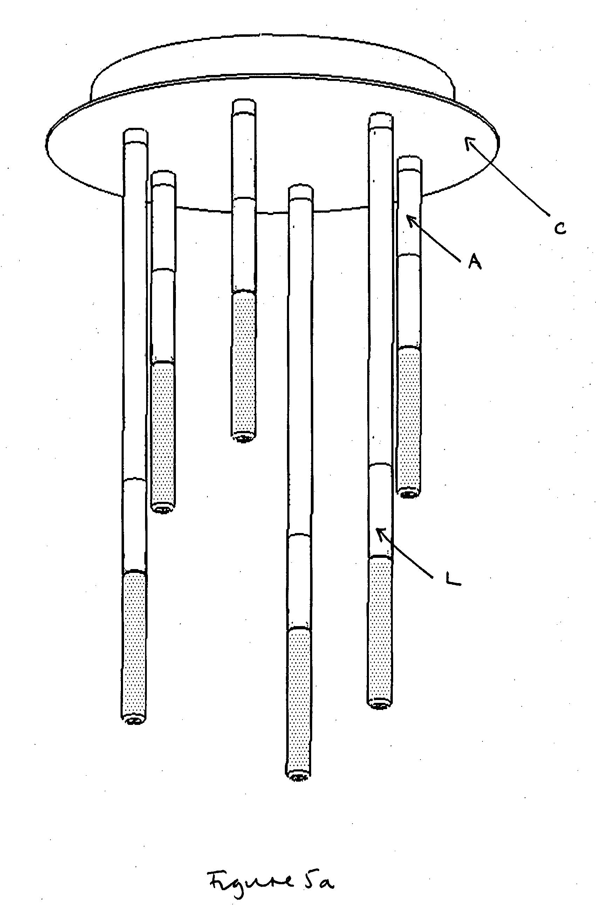

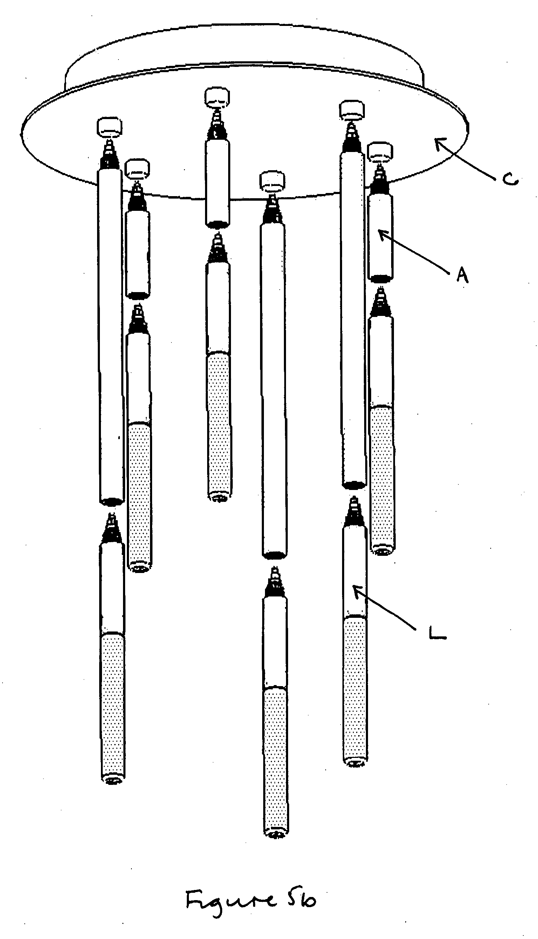

Figures 5a and 5b depict a first embodiment of a lighting system that is suitable for mounting on a ceiling. The lighting system comprises a ceiling rose (C) and multiple arms (A).

The ceiling rose is configured to be mechanically coupled to a ceiling and electrically coupled to a mains power supply. Each arm is configured to be mechanically and electrically coupled to the ceiling rose and a lamp assembly (L) so that it can support and distribute an electrical current to the light source of the lamp assembly.

Each arm (A) is a rigid cable according to a first aspect of the invention. In the embodiment depicted in Figures 5a and 5b, the arms are configured to extend downwardly from the ceiling rose. The first end of each arm is configured to be mechanically and electrically coupled to the ceiling rose. A second end of each arm is configured to be mechanically and electrically coupled to a lamp assembly.

As shown in Figures 5a and 5b the length of the arms may vary so as to locate the lamps at different heights. Also, each arm has a continuous, fluid configuration that is arranged flush with its corresponding lamp assembly so as to provide an aesthetically pleasing effect.

The lamp assemblies are configured to be removably coupled to the arms so that they can be replaced when no longer operational. Likewise, the arms are configured to be removably coupled to the ceiling rose. As a result, the arms can be replaced or coupled to further rigid cables so as to alter the configuration of the lighting system.

### B2. Second Embodiment of the Lighting System

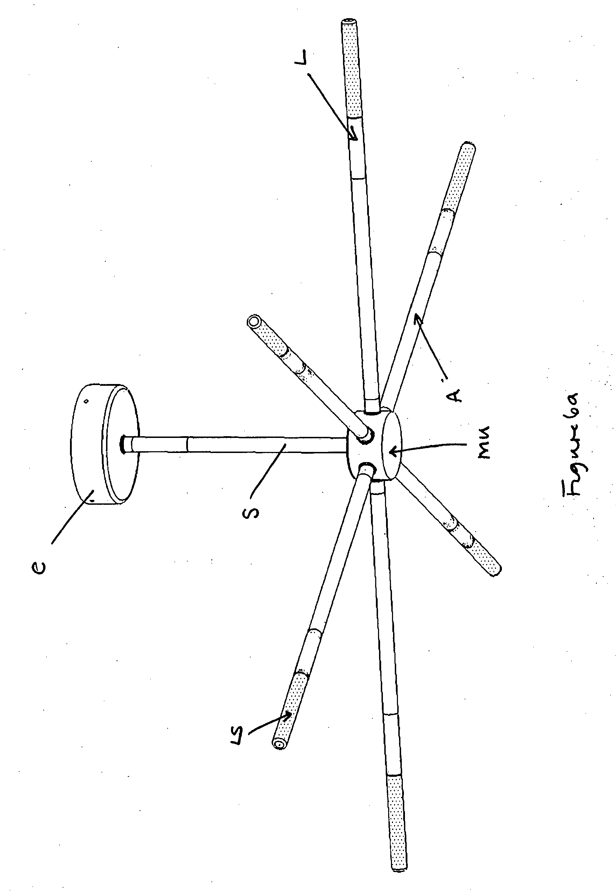

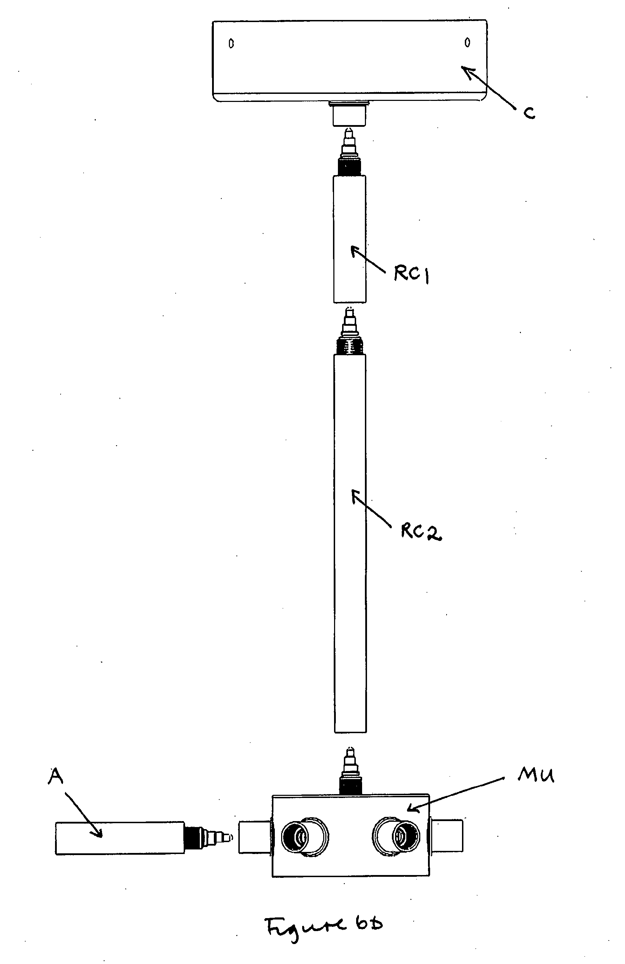

Figures 6a and 6b depict a further embodiment of lighting system that is suitable for mounting on a ceiling. In this embodiment, the lighting system further comprises a ceiling rose (C), a stem (S), mounting unit (MU) and plurality of lamp supporting arms (A).

The ceiling rose (C) is configured to be mechanically coupled to a ceiling and electrically coupled to a mains power supply.

The stem (S) is configured to be mechanically and electrically coupled to the ceiling rose and the mounting unit. The stem is configured to extend downwardly from the ceiling rose. A first end of the stem is configured to be mechanically and electrically coupled to the ceiling rose. A second end of the stem is configured to be mechanically and electrically coupled to the mounting unit. It can be seen in Figure 6b that the stem is configured to be removably coupled to the ceiling rose and the mounting unit. The stem comprises two rigid cables RC1 and RC2 according to the first aspect of the invention. In the embodiment depicted, the rigid cables are configured to be removably coupled.

The mounting unit (MU) is configured to interconnect the stem and a plurality of lamp supporting arms. In the embodiment depicted, the mounting unit is configured to support and distribute an electrical current to six lamp supporting arms. The mounting unit is configured to be removably coupled to the stem and lamp supporting arms.

Each lamp supporting arm (A) is configured to be mechanically and electrically coupled to the mounting unit and a lamp assembly (L) so that it can support and distribute an electrical current to the light source of the lamp assembly.

Each lamp supporting arm (A) is a rigid cable according to a first aspect of the invention. In the embodiment depicted in Figures 6a and 6b, the arms are configured to extend outwardly from the mounting unit in a generally horizontal direction. The first end of each arm is configured to be mechanically and electrically coupled to the mounting unit. A second end of each arm is configured to be mechanically and electrically coupled to a lamp assembly.

The ceiling rose, stem, mounting unit and lamp supporting arms preferably have the same decorative finish so as to provide a unifying effect. The stem, lamp supporting arms and lamps preferably have a substantially similar continuous, fluid configuration so as to achieve a harmonious effect. Also, each arm is preferably arranged flush with the corresponding lamp assembly.

The lamp assemblies are configured to be removably coupled to the arms so that they can be replaced when no longer operational. Likewise, the arms are removably coupled to the ceiling rose.

It will be appreciated that the configuration of the lighting systems depicted in Figures 5a-6b may be selected and changed by removing or adding different component parts. For example, it will be understood that the number of arms may be selected in accordance with the desired configuration of the lighting system and desired lighting effect. The length of an arm may be selected by increasing or decreasing the number of rigid cables in the arm. Moreover, the shape of an arm may be selected by using rigid cables of a particular shape. The length of the stem may be selected by increasing or decreasing the number of rigid cables in the stem. Also, the shape of the stem may be selected by using rigid cables of a particular shape.

Throughout the description and claims of this specification, the words "comprise" and "contain" and variations of the words, for example "comprising" and "containing", means "including but not limited to, and is not intended to (and does not) exclude other moieties, additives, components, integers or steps.

Throughout the description and claims, the singular encompasses the plural unless the context otherwise requires. In particular, where the indefinite article is used, the specification is to be understood as contemplating plurality as well as singularity, unless the context requires otherwise.

Features, integers, characteristics or groups described in conjunction with a particular aspect, embodiment or example of the invention are to be understood to be applicable to any other aspect, embodiment or example described herein unless incompatible therewith. The structural arrangement and use of subsection headings within the description is not intended to limit the scope of the invention or exclude any combination of features unless the context requires. However, the scope of the invention is limited by the claims.

## Claims

1. A low voltage rigid cable comprising:
a substantially rigid housing;
a live conductor arranged within the housing;
a neutral conductor arranged within the housing;
a first coupling means to couple the cable with a first member;
a second coupling means configured to couple the cable with a second member; and
protection means to protect against electric shock,
**characterized by** the housing comprising an electrically conductive material and is configured to form an earth conductor.

2. A cable according to claim 1, wherein the protection means comprise insulating means, the insulating means being configured to form an insulating barrier between the conductive parts of the cable.

3. A cable according to any preceding claim, wherein the protection means comprise double insulation:
including first insulating means configured to form a primary insulation barrier for the live conductor and for the neutral conductor; and
a second insulating means configured to form a secondary insulating barrier so as to prevent electric shock in the event of a failure of the
first insulating means, or
wherein the protection means comprises reinforced insulation configured to form an insulation barrier between the live conductor, the neutral conductor and housing.

4. A cable according to any preceding claim, wherein the first coupling means and/or second coupling means of the cable are releasable coupling means.

5. A cable according to any preceding claim, wherein the first coupling means and second coupling means comprise electrical coupling means to electrically couple the cable with the first member and second member respectively, and/or
wherein the first coupling means and the second coupling means comprise mechanical coupling means to mechanically couple the cable with the first member and second member respectively, optionally, when the first and second coupling means comprises mechanical coupling means, the mechanical coupling means comprises at least one of:-
push fit means, latching means, clipping means, screw means, resilient biasing means, friction fit means, key locking means or screw thread means.

6. A cable according to any preceding claim, wherein the first coupling means and/or the second coupling means of the cable is a male coupling means to mechanically and electrically couple the complementary female coupling means of the another member, optionally, the male coupling means comprises a plug portion having:
a live contact that is coupled to the live conductor of the cable, configured to form of a central pin contact and arranged to form a mating contact with a corresponding live contact of the complementary female coupling means;
a neutral contact that is coupled to the neutral conductor of the rigid cable and is arranged coaxially, in a stepped formation relative to the live contact with an insulator located therebetween and arranged to form a mating contact with a corresponding neutral contact of the complementary female coupling means,
optionally, when the male coupling means comprises a plug portion, the male coupling means comprises an earth contact that is coupled to the earth conductor and is arranged to form a mating contact with a corresponding earth contact of the complementary female coupling means.

7. A cable according to claim 6, wherein the male coupling means comprise screw thread region configured to threadably engage a corresponding screw thread region of the complementary female coupling means.

8. A cable according to any preceding claim wherein the first coupling means and/or second coupling means of the cable is a female coupling means to mechanically and electrically couple the complementary male coupling means of another member, optionally,
the female coupling means comprises a socket portion having:
a recess configured to receive a plug portion of the complementary male coupling means;
a live contact that is coupled to the live conductor and is arranged to form a mating contact with a corresponding live contact of the complementary male coupling means; and
a neutral contact that is coupled to the neutral conductor and is arranged to form a mating contact with a corresponding neutral contact of the complementary male coupling means, optionally
the female coupling means comprises an earth contact that is coupled
to the earth conductor and is arranged to form a mating contact with a corresponding earth contact of the complementary male coupling means.

9. A cable according to claim 8, wherein the female coupling means comprise a screw thread region configured to threadably engage a corresponding screw thread region of the complementary male coupling means.

10. A cable according to any preceding claim, wherein the first member and/or second member comprises at least one of:-
a rigid cable of at least substantially similar form, a flexible cable, an electrical power supply, a mounting means and an electrical device (for example, a light source).

11. A rigid cable structure for supporting an electrical device and for transferring electrical current from a power supply to the electrical device, the cable structure comprising at least one rigid cable comprising any of the features defined in claims 1-10.

12. A lamp assembly comprising at least one light source coupled to a rigid cable comprising any of the features defined in claims 1-10.

13. A lamp assembly according to claim 12, wherein the light source is a low energy light source, and/or
wherein the rigid cable comprises power control means to regulate the voltage supply to the light source.

14. A lighting system comprising:
means for mounting the lighting system on a supporting surface;
means for connecting the lighting system to a power supply; and
at least one rigid cable comprising any of the features as defined in claims 1-10, whereby the at least one cable is configurable to form a rigid cable structure to support at least one light source and transfer electrical current from the power supply power supply to the at least one light source.

15. A lighting system according to claim 14, wherein the mounting means is configured to mount the lighting system on a floor, table, wall or ceiling,
and/or
further comprising one or more light source and/or one or more lamp assembly as defined in claim 12 or 13, and/or
wherein the lighting system is a modular lighting system.

## Patentansprüche

1. Starres Niederspannungskabel, das Folgendes umfasst:
ein im Wesentlichen starres Gehäuse,
einen stromführenden Leiter, der innerhalb des Gehäuses angeordnet ist,
einen neutralen Leiter, der innerhalb des Gehäuses angeordnet ist,
ein erstes Kopplungsmittel zum Koppeln des Kabels mit einem ersten Element,
ein zweites Kopplungsmittel, konfiguriert zum Koppeln des Kabels mit einem zweiten Element, und
Schutzmittel zum Schützen gegen elektrischen Schlag,
**dadurch gekennzeichnet, dass** das Gehäuse ein elektrisch leitfähiges Material umfasst und dafür konfiguriert ist, einen Erdleiter zu bilden.

2. Kabel nach Anspruch 1, wobei die Schutzmittel Isolationsmittel umfassen, wobei die Isolationsmittel dafür konfiguriert sind, eine isolierende Sperre zwischen den leitfähigen Teilen des Kabels zu bilden.

3. Kabel nach einem der vorhergehenden Ansprüche, wobei die Schutzmittel doppelte Isolierung umfassen:
einschließlich erster Isolationsmittel, die dafür konfiguriert sind, eine primäre Isolationssperre für den stromführenden Leiter und für den neutralen Leiter zu bilden, und
eines zweiten Isolationsmittels, das dafür konfiguriert ist, eine sekundäre isolierende Sperre zu bilden, um so im Fall eines Versagens der ersten Isolationsmittel einen elektrischen Schlag zu verhindern, oder
wobei die Schutzmittel eine verstärkte Isolation umfassen, die dafür konfiguriert ist, eine Isolationssperre zwischen dem stromführenden Leiter, dem neutralen Leiter und dem Gehäuse zu bilden.

4. Kabel nach einem der vorhergehenden Ansprüche, wobei das erste Kopplungsmittel und/oder das zweite Kopplungsmittel des Kabels lösbare Kopplungsmittel sind.

5. Kabel nach einem der vorhergehenden Ansprüche, wobei das erste Kopplungsmittel und das zweite Kopplungsmittel elektrische Kopplungsmittel umfassen, um das Kabel elektrisch mit dem ersten beziehungsweise dem zweiten Element zu koppeln, und/oder
wobei das erste Kopplungsmittel und das zweite Kopplungsmittel mechanische Kopplungsmittel umfassen, um das Kabel mechanisch mit dem ersten beziehungsweise dem zweiten Element zu koppeln, wobei wahlweise, wenn das erste und das zweite Kopplungsmittel mechanische Kopplungsmittel umfassen, die mechanischen Kopplungsmittel wenigstens eines von Folgendem umfassen:
Schiebepassungsmittel, Einrastmittel, Klammermittel, Schraubmittel, elastische Vorspannmittel, Reibschlussmittel, Keilvernegelungsmittel oder Schraubgewindemittel.

6. Kabel nach einem der vorhergehenden Ansprüche, wobei das erste Kopplungsmittel und/oder das zweite Kopplungsmittel des Kabels ein Einsteck-Kopplungsmittel ist, um mechanisch und elektrisch das komplementäre Aufnahme-Kopplungsmittel eines anderen Elements zu koppeln, wobei wahlweise das Einsteck-Kopplungsmittel einen Steckerabschnitt umfasst, der Folgendes aufweist:
einen stromführenden Kontakt, der an den stromführenden Leiter des Kabels gekoppelt ist, dafür konfiguriert, einen Mittelstiftkontakt zu bilden, und dafür angeordnet, einen Steckkontakt mit einem entsprechenden stromführenden Kontakt des komplementären Aufnahme-Kopplungsmittels herzustellen,
einen neutralen Kontakt, der an den neutralen Leiter des starren Kabels gekoppelt ist und koaxial angeordnet ist, in einer abgestuften Konfiguration im Verhältnis zu dem stromführenden Kontakt, mit einem zwischen denselben angeordneten Isolator, und dafür angeordnet, einen Steckkontakt mit einem entsprechenden neutralen Kontakt des komplementären Aufnahme-Kopplungsmittels herzustellen,
wobei wahlweise, wenn das Einsteck-Kopplungsmittel einen Steckerabschnitt umfasst, das Einsteck-Kopplungsmittel einen Erdkontakt umfasst, der an den Erdleiter gekoppelt ist und dafür angeordnet ist, einen Steckkontakt mit einem entsprechenden Erdkontakt des komplementären Aufnahme-Kopplungsmittels herzustellen.

7. Kabel nach Anspruch 6, wobei das Einsteck-Kopplungsmittel einen Schraubgewindebereich umfasst, der dafür konfiguriert ist, einen entsprechenden Schraubgewindebereich des komplementären Aufnahme-Kopplungsmittels in Gewindeeingriff zu nehmen.

8. Kabel nach einem der vorhergehenden Ansprüche, wobei das erste Kopplungsmittel und/oder das zweite Kopplungsmittel des Kabels ein Aufnahme-Kopplungsmittel ist, um mechanisch und elektrisch das komplementäre Einsteck-Kopplungsmittel eines anderen Elements zu koppeln, wobei wahlweise
das Aufnahme-Kopplungsmittel einen Buchsenabschnitt umfasst, der Folgendes aufweist:
eine Aussparung, die dafür konfiguriert ist, einen Steckerabschnitt des komplementären Einsteck-Kopplungsmittels aufzunehmen,
einen stromführenden Kontakt, der an den stromführenden Leiter des Kabels gekoppelt ist und dafür angeordnet ist, einen Steckkontakt mit einem entsprechenden stromführenden Kontakt des komplementären Einsteck-Kopplungsmittels herzustellen, und
einen neutralen Kontakt, der an den neutralen Leiter gekoppelt ist und dafür angeordnet ist, einen Steckkontakt mit einem entsprechenden neutralen Kontakt des komplementären Einsteck-Kopplungsmittels herzustellen, wobei wahlweise
das Aufnahme-Kopplungsmittel einen Erdkontakt umfasst, der an den Erdleiter gekoppelt ist und dafür angeordnet ist, einen Steckkontakt mit einem entsprechenden Erdkontakt des komplementären Einsteck-Kopplungsmittels herzustellen.

9. Kabel nach Anspruch 8, wobei das Aufnahme-Kopplungsmittel einen Schraubgewindebereich umfasst, der dafür konfiguriert ist, einen entsprechenden Schraubgewindebereich des komplementären Einsteck-Kopplungsmittels in Gewindeeingriff zu nehmen.

10. Kabel nach einem der vorhergehenden Ansprüche, wobei das erste Element und/oder das zweite Element wenigstens eines von Folgendem umfassen:
ein starres Kabel von wenigstens im Wesentlichen ähnlicher Form, ein flexibles Kabel, eine elektrische Energieversorgung, ein Anbringungsmittel und ein elektrisches Gerät (zum Beispiel eine Lichtquelle).

11. Starre Kabelstruktur zum Tragen eines elektrischen Geräts und zum Weiterleiten von elektrischem Strom von einer Energieversorgung zu dem elektrischen Gerät, wobei die Kabelstruktur wenigstens ein starres Kabel umfasst, das eines der in den Ansprüchen 1 bis 10 definierten Merkmale umfasst.

12. Lampenbaugruppe, die wenigstens eine Lichtquelle umfasst, die an ein starres Kabel gekoppelt ist, das eines der in den Ansprüchen 1 bis 10 definierten Merkmale umfasst.

13. Lampenbaugruppe nach Anspruch 12, wobei die Lichtquelle eine Niedrigenergie-Lichtquelle ist und/oder
wobei das starre Kabel Leistungsregelungsmittel umfasst, um die Spannungsversorgung für die Lichtquelle zu regulieren.

14. Beleuchtungssystem, das Folgendes umfasst:
Mittel zum Anbringen des Beleuchtungssystems an einer Stützfläche,
Mittel zum Verbinden des Beleuchtungssystems mit einer Energieversorgung und
wenigstens ein starres Kabel, das eines der in den Ansprüchen 1 bis 10 definierten Merkmale umfasst, wobei das wenigstens eine Kabel konfigurierbar ist, um eine starre Kabelstruktur zum Tragen wenigstens einer Lichtquelle und zum Weiterleiten von elektrischem Strom von der Energieversorgung zu der wenigstens einen Lichtquelle zu bilden.

15. Beleuchtungssystem nach Anspruch 14, wobei die Anbringungsmittel dafür konfiguriert sind, das Beleuchtungssystem an einem Boden, einem Tisch, einer Wand oder einer Decke anzubringen, und/oder
das ferner eine oder mehrere Lichtquellen und/oder eine oder mehrere Lampenbaugruppen, wie in Anspruch 12 oder 13 definiert, umfasst und/oder
wobei das Beleuchtungssystem ein modulares Beleuchtungssystem ist.

## Revendications

1. Câble rigide à basse tension, comprenant :
un boîtier essentiellement rigide ;
un conducteur sous tension agencé dans le boîtier ;
un conducteur neutre agencé dans le boîtier ;
un premier moyen d'accouplement, destiné à accoupler le câble à un premier élément ;
un deuxième moyen d'accouplement, destiné à accoupler le câble à un deuxième élément ; et
des moyens de protection, pour assurer la protection contre un choc électrique ;
**caractérisé en ce que** le boîtier comprend un matériau conducteur d'électricité et est configuré de sorte à former un conducteur de terre.

2. Câble selon la revendication 1, dans lequel les moyens de protection comprennent des moyens d'isolation, les moyens d'isolation étant configurés de sorte à former une barrière d'isolation entre les parties conductrices du câble.

3. Câble selon l'une quelconque des revendications précédentes, dans lequel les moyens de protection comprennent une double isolation :
englobant un premier moyen d'isolation configuré de sorte à former une barrière d'isolation primaire pour le conducteur sous tension et le conducteur neutre ; et
un deuxième moyen d'isolation configuré de sorte à former une barrière d'isolation secondaire, de sorte à empêcher un choc électrique en cas d'une défaillance du premier moyen d'isolation ; ou
dans lequel le moyen de protection comprend une isolation renforcée, configurée de sorte à former une barrière d'isolation entre le conducteur sous tension, le conducteur neutre et le boîtier.

4. Câble selon l'une quelconque des revendications précédentes, dans lequel le premier moyen d'accouplement et/ou le deuxième moyen d'accouplement du câble sont des moyens d'accouplement amovibles.

5. Câble selon l'une quelconque des revendications précédentes, dans lequel le premier moyen d'accouplement et le deuxième moyen d'accouplement comprennent un moyen d'accouplement électrique pour assurer respectivement l'accouplement électrique du câble au premier élément et au deuxième élément, et/ou :
dans lequel le premier moyen d'accouplement et le deuxième moyen d'accouplement comprennent un moyen d'accouplement mécanique pour assurer respectivement l'accouplement mécanique du câble au premier élément et au deuxième élément, et optionnellement, lorsque les premier et deuxième moyens d'accouplement comprennent un moyen d'accouplement mécanique, le moyen d'accouplement mécanique comprend au moins un des moyens ci-dessous :
un moyen d'ajustement par poussée, un moyen de verrouillage, un moyen d'attache, un moyen poussoir élastique, un moyen d'ajustement par frottement, un moyen de verrouillage à clé ou un moyen à filet de vis.

6. Câble selon l'une quelconque des revendications précédentes, dans lequel le premier moyen d'accouplement et/ou le deuxième moyen d'accouplement du câble sont des moyens d'accouplement mâles, destinés à assurer l'accouplement mécanique et électrique du moyen l'accouplement femelle complémentaire de l'autre élément, et optionnellement, dans lequel le moyen d'accouplement mâle comprend une partie de fiche, comportant :
un contact sous tension, accouplé au conducteur sous tension du câble, destiné à former un contact à broche central et agencé de sorte à former un contact d'accouplement avec un contact sous tension correspondant du moyen d'accouplement femelle complémentaire ;
un contact neutre, accouplé au conducteur neutre du câble rigide et agencé de manière coaxiale, dans une structure étagée par rapport au contact sous tension, un isolateur étant agencé entre eux, et destiné à former un contact d'accouplement avec un contact neutre correspondant du moyen d'accouplement femelle complémentaire ;
et optionnellement, lorsque le moyen d'accouplement mâle comprend une partie de fiche, le moyen d'accouplement mâle comprend un contact de terre, accouplé au conducteur de terre et destiné à former un contact d'accouplement avec un contact de terre correspondant du moyen d'accouplement femelle complémentaire.

7. Câble selon la revendication 6, dans lequel les moyens d'accouplement mâles comprennent une région à filet de vis, configurée de sorte à s'engager par filetage dans une région à filet de vis correspondante du moyen d'accouplement femelle complémentaire.

8. Câble selon l'une quelconque des revendications précédentes, dans lequel le premier moyen d'accouplement et/ou le deuxième moyen d'accouplement du câble est un moyen d'accouplement femelle destiné à assurer l'accouplement mécanique et électrique au moyen d'accouplement mâle complémentaire d'un autre élément ; et optionnellement
dans lequel le moyen d'accouplement femelle comprend un partie de douille, comportant :
un évidement, configuré de sorte à recevoir une partie de fiche du moyen d'accouplement mâle complémentaire ;
un contact sous tension, accouplé au conducteur sous tension et destiné à former un contact d'accouplement avec un contact sous tension correspondant du moyen d'accouplement mâle complémentaire ; et
un contact neutre, accouplé au conducteur neutre et destiné à former un contact d'accouplement avec un contact neutre correspondant du moyen d'accouplement mâle complémentaire ; optionnellement
dans lequel le moyen d'accouplement femelle comprend un contact de terre, accouplé au conducteur de terre et destiné à former un contact d'accouplement avec un contact de terre correspondant du moyen d'accouplement mâle complémentaire.

9. Câble selon la revendication 8, dans lequel les moyens d'accouplement femelles comprennent une région à filet de vis configurée de sorte à s'engager par filetage dans une région à filet de vis correspondante des moyens d'accouplement mâles complémentaires.

10. Câble selon l'une quelconque des revendications précédentes, dans lequel le premier élément et/ou le deuxième élément comprend au moins un des éléments ci-dessous :
un câble rigide ayant une forme au moins essentiellement similaire, un câble flexible, une alimentation en énergie électrique, un moyen de montage et un dispositif électrique (par exemple une source de lumière).

11. Structure de câble rigide pour supporter un dispositif électrique et pour transférer un coûtant électrique d'une alimentation en énergie vers le dispositif électrique, la structure de câble comprenant au moins un câble rigide présentant une des caractéristiques définies dans les revendications 1 à 10.

12. Assemblage de lampe, comprenant au moins une source de lumière accouplée à un câble rigide, présentant l'une quelconque des caractéristiques définies dans les revendications 1 à 10.

13. Assemblage de lampe selon la revendication 12, dans lequel la source de lumière est une source de lumière basse énergie, et/ou
dans lequel le câble rigide comprend un moyen de commande de la puissance pour régler l'alimentation en tension de la source de lumière.

14. Système d'éclairage, comprenant :
un moyen pour monter le système d'éclairage sur une surface de support ;
un moyen pour connecter le système d'éclairage à une alimentation en énergie ; et
au moins un câble rigide présentant l'une quelconque des caractéristiques définies dans les revendications 1 à 10, le au moins un câble pouvant ainsi être configuré de sorte à former une structure de câble rigide pour supporter au moins une source de lumière et transférer le courant électrique de l'alimentation en énergie vers la au moins une source de lumière.

15. Système d'éclairage selon la revendication 14, dans lequel le moyen de montage est destiné à monter le système d'éclairage sur un sol, une table, un mur ou un plafond ; et/ou
comprenant en outre une ou plusieurs sources de lumière et/ou un ou plusieurs assemblages de lampe selon les revendications 12 ou 13 ; et/ou
dans lequel le système d'éclairage est un système d'éclairage modulaire.
